# EUROPÄISCHE PATENTANMELDUNG

(11) **EP 1 867 982 A2**
(43) Veröffentlichungstag der Anmeldung: **19.12.2007**
(21) Anmeldenummer: 07011467.3
(22) Anmeldetag: 12.06.2007
(51) Int. Cl.: G01N 30/08, G01N 30/60

(54) **Miniaturisierte gaschromatographische Analysevorrichtung mit Probenanreicherung**

(30) Priorität: 15.06.2006 DE 102006028126
(71) Anmelder: SLS Micro Technology GmbH, 21079 Hamburg (DE)
(72) Erfinder: Lehmann, Uwe, 22587 Hamburg (DE)
(74) Vertreter: Eisenführ, Speiser & Partner

(57) **Zusammenfassung**

Die Erfindung betrifft eine mikrotechnologische Analysevorrichtung, umfassend eine Probeneinlassöffnung für zu analysierendes Probenmaterial, und eine mikrotechnologische Analyseeinheit, die mit der Probeneinlassöffnung verbunden ist, um zumindest eine Eigenschaft des Probenmaterials zu bestimmen. Erfindungsgemäß wird diese Analysevorrichtung mit einer mikrotechnologischen Probenanreicherungskammer, die in Strömungsrichtung des Probenmaterials zwischen Probeneinlassöffnung und Analyseeinheit angeordnet ist, fortgebildet.

## Beschreibung

Die Erfindung betrifft eine mikrotechnologische Analysevorrichtung, umfassend
- eine Probeneinlassöffnung für zu analysierendes Probenmaterial, und
- eine mikrotechnologische Analyseeinheit, die mit der Probeneinlassöffnung verbunden ist, um zumindest eine Eigenschaft des Probenmaterials zu bestimmen.

Solche Analysevorrichtungen sind bereits vorbekannt. Eine grundlegende Beschreibung der Technologie miniaturisierter Gaschromatographiegeräte mikrotechnologischer Art findet sich in DE 10 2004 050 569.1-52. DE 20 2005 011 825.7 beschreibt eine solche miniaturisierte Analysevorrichtung, die aus einer gaschromatischen Trennsäule besteht, ausgeführt als Dünnschichttrennsäule oder gepackte Trennsäule, die mittels eines speziellen Umschaltventils auf verschiedene Arten und Weisen in bestimmter zeitlicher Abfolge von dem zu analysierenden Probengas durchströmt werden.

Mikrotechnologische Analysevorrichtungen finden eine zunehmende, breitere Nutzung in einer Vielzahl unterschiedlicher Anwendungsgebiete. Ein wichtiger Vorteil mikrotechnologischer Analysevorrichtungen besteht darin, dass nur geringe Mengen des zu analysierenden Stoffes benötigt werden, dass eine rasche Ansprechzeit der gesamten Analysevorrichtung auf eine Temperatursteuerung sichergestellt ist aufgrund der geringen gesamten gespeicherten Wärmemenge und dass sich neue Anwendungsgebiete aufgrund des kompakten Aufbaus der Analysevorrichtung erschließen.

Mikrotechnologische Analysevorrichtungen nach dem Stand der Technik können bereits in zuverlässiger Weise eine Vielzahl von Analysevorgängen durchführen. Jedoch sind in verschiedener Hinsicht noch Verbesserungen an den bislang bekannten Geräten erforderlich. So ist es oftmals wünschenswert, die Menge des zu analysierenden Stoffes auf Stoffproben auszudehnen, die an verschiedenen Orten oder die über einen längeren Zeitraum oder über mehrere Zeiträume gesammelt wurden. Dies kann mit den bekannten mikrotechnologischen Analysevorrichtungen nur durch Betrieb der Vorrichtung über einen längeren Zeitraum erreicht werden, was jedoch in vielen Anwendungsfällen nicht wünschenswert ist. Der Erfindung liegt die Aufgabe zugrunde, diesen Nachteil bekannter Vorrichtungen zu überwinden.

Dies wird erfindungsgemäß erreicht, indem eine mikrotechnologische Probenanreicherungskammer, die in Strömungsrichtung des Probenmaterials zwischen Probeneinlassöffnung und Analyseeinheit angeordnet ist, bereitgestellt wird.

Die mikrotechnologische Probenanreicherungskammer ermöglicht es, dass in einem ersten Betriebszustand der zu analysierende Stoff zunächst in der Probenanreicherungskammer gesammelt wird. Dies kann zweckmäßigerweise erfolgen, indem die Probenanreicherungskammer von dem zu analysierenden Gas oder Fluid durchströmt wird und dazu ausgebildet ist, um die zu analysierenden Bestandteile festzuhalten und folglich hinsichtlich Ihrer Konzentration zu erhöhen bzw. angereichert zu speichern. In einem zweiten Betriebszustand wird der solcherart angereicherte, zu analysierende Stoff aus der Probenanreicherungskammer in die Analyseeinheit geleitet und analysiert. Hierbei ist zur quantitativen Bestimmung der Inhaltsstoffe des zu analysierenden Stoffs der Anreicherungsfaktor beim Sammeln des Stoffs in der Probenanreicherungskammer als Quotient zu berücksichtigen. Die Probenanreicherungskammer ist in mikrotechnologischer Bauweise ausgeführt, so dass sie mit der mikrotechnologischen Analyseeinheit zusammenwirken kann und sowohl Temperaturführung als auch der Volumenaustausch in der für die Genauigkeit der Messung erforderlichen Abstimmung stattfinden kann. Die erfindungsgemäße Analysevorrichtung erlaubt es somit, mittels einer mikrotechnologischen Anordnung eine zeitlich aufeinanderfolgende Probenanreicherung und Probenanalyse durchzuführen und erweitert hierdurch das Spektrum der Anwendungsmöglichkeiten für mikrotechnologische Analysevorrichtungen. Zudem kann durch die Anreicherung ein großes Fluidvolumen untersucht werden und hierdurch lokale Konzentrationsschwankungen des zu analysierenden Fluids ausgeglichen werden, was die Messgenauigkeit in bestimmten Anwendungen erhöht.

Bei einer ersten bevorzugten Ausführungsform weist die Probenanreicherungskammer eine Probeneinlassöffnung, eine Probenauslassöffnung und eine in Durchströmungsrichtung der Probenanreicherungskammer zwischen Probeneinlassöffnung und Probenauslassöffnung angeordnete Probenanreicherungskammer auf. Dieser Aufbau der Probenanreicherungskammer ermöglicht eine insbesondere für mikrotechnologische Zwecke fertigungstechnisch in zuverlässiger Weise realisierbare Probenanreicherungskammer und eine für die Durchführung der Zwecke günstige Durchströmung dieser.

Dabei ist es besonders bevorzugt, wenn die Probeneinlassöffnung und die Probenauslassöffnung parallel, vorzugsweise fluchtend zueinander ausgerichtet sind. Insbesondere bei durchströmten mikrotechnologischen Bauteilen ist es für die Genauigkeit der Messung vorteilhaft, wenn Totvolumina möglichst weitgehend vermieden werden, um Messungenauigkeiten oder Messverfälschungen zu verhindern. Zu diesem Zweck ist es vorteilhaft, wenn Ein- und Ausströmung in paralleler Weise stattfinden, um Umlenkungen des durchströmenden Fluids zu vermeiden. Insbesondere kann eine günstige Durchströmung erreicht werden, wenn Ein- und Auslasskanal fluchtend zueinander angeordnet sind, also auch kein seitlicher Versatz oder Höhenversatz zwischen Einlass- und Auslasskanal bestehen.

Weiterhin ist es vorteilhaft, wenn sich die Probenanreicherungskammer in Durchströmungsrichtung weniger weit erstreckt als quer dazu. Durch diese Ausführungsform wird die Beladungskapazität gesteigert, ohne dass es in der Probenanreicherungskammer zu einer Komponententrennung kommt und somit ein kompaktes Probenpaket für die darauf folgende Analyse zur Verfügung gestellt.

Die erfindungsgemäße Analysevorrichtung kann weiter fortgebildet werden, indem zwischen Probenanreicherungskammer und Probeneinlassöffnung ein mikrotechnologisches Ventil angeordnet ist, welches in einer ersten Ventilstellung die Probeneinlassöffnung mit einer Einlassöffnung der Probenanreicherungskammer und eine Auslassöffnung der Probenanreicherungskammer mit einer Probenauslassöffnung verbindet und welches in einer zweiten Ventilstellung eine Trägergaseinlassöffnung mit der Einlassöffnung der Probenanreicherungskammer und eine Auslassöffnung der Probenanreicherungskammer mit einer Einlassöffnung der Analyseeinheit verbindet. Auf diese Weise wird die miniaturisierte Probenanreicherungskammer in besonders vorteilhafter konstruktiver Ausführung der gesamten Analysevorrichtung mit einem miniaturisierten Ventil kombiniert und hierdurch die zumindest zwei Betriebszustände der Analysevorrichtung durch Verstellung des Ventils ermöglicht. Das Ventil ist dabei vorzugsweise als Schieberventil ausgeführt, bei dem ein Substrat mit darin ausgebildeten Ventilkanälen zu einem zweiten Substrat mit darin ausgebildeten Ventilkanälen verschoben wird und hierdurch eine Verbindung unterschiedlicher Ventilkanäle erreicht wird.

Bei einer weiteren vorteilhaften Ausführungsform ist die Probenanreicherungskammer zumindest teilweise mit einem Adsorbermaterial gefüllt. Diese Ausführungsform ist für bestimmte Analyseaufgaben besonders vorteilhaft, um eine gezielte Anreicherung zu analysierender Stoffe in der Probenanreicherungskammer zu erreichen. Das Adsorbermaterial kann beispielsweise Zeolite (Al₂O₃), Graphit und/oder organische Adsorber umfassen.

Weiterhin ist es vorteilhaft, wenn die Probenanreicherungskammer einen Einlassabschnitt, der sich im Strömungsquerschnitt erweitert, einen Auslassabschnitt, der sich im Strömungsquerschnitt verringert, und einen Probenanreicherungsabschnitt in Strömungsrichtung zwischen Einlass- und Auslassabschnitt umfasst. Auf diese Weise wird eine besonders strömungsgünstige Form der Probenanreicherungskammer erreicht und hierdurch Totvolumina vermieden. Der Einlassabschnitt schließt sich dabei in Strömungsrichtung an die Einlassöffnung an und der Auslassabschnitt mündet in Strömungsrichtung in die Auslassöffnung der Probenanreicherungskammer. Vorzugsweise liegen Einlassabschnitt, Probenanreicherungsabschnitt und Auslassabschnitt hinsichtlich ihrer Durchströmungsrichtung fluchtend zueinander, um Strömungsrichtungsänderungen bei Durchströmung der Probenanreicherungskammer zu vermeiden. Insbesondere ist es bevorzugt, dass Einlassöffnung, Einlassabschnitt, Probenanreicherungsabschnitt, Auslassabschnitt und Auslassöffnung zueinander in Strömungsrichtung fluchtend liegen.

Dabei ist es weiter bevorzugt, wenn der Einlassabschnitt und/oder Auslassabschnitt von dem Probenanreicherungsabschnitt mittels einer Trennstruktur abgetrennt ist, welche für das Probenmaterial durchlässig und für das Adsorbermaterial undurchlässig ist. Mit dieser Ausführungsform wird erreicht, dass der Einlassabschnitt, der Auslassabschnitt und der Probenanreicherungsabschnitt unabhängig voneinander mit Adsorbermaterial befüllt werden können. Hierdurch wird insbesondere ermöglicht, im Einlassabschnitt und Auslassabschnitt kein Adsorbermaterial vorzusehen und hierdurch eine günstige Strömungsausbildung des Fluids in den sich erweiternden bzw. sich verengenden Bereich zu erzielen. Die Trennstruktur kann beispielsweise in Gestalt von Stegen oder einer siebförmigen Struktur ausgebildet sein, deren Stegabstand bzw. Lochdurchmesser kleiner ist als das Adsorbens bzw. eine Trägerstruktur, auf der das Adsorbens aufgetragen ist.

Insbesondere ist es dabei bevorzugt, wenn nur im Probenanreicherungsabschnitt Adsorbermaterial angeordnet ist.

Bei einer weiteren Fortbildung der erfindungsgemäßen Vorrichtung umfasst die Probenanreicherungskammer einen Einlassabschnitt, der sich im Strömungsquerschnitt erweitert, einen Auslassabschnitt, der sich im Strömungsquerschnitt verringert, einen ersten Probenanreicherungsabschnitt in Strömungsrichtung zwischen Einlass- und Auslassabschnitt und zumindest einen weiteren Probenanreicherungsabschnitt in Strömungsrichtung zwischen Einlass- und Auslassabschnitt. Durch die Bereitstellung von zwei oder mehr Probenanreicherungsabschnitten wird die Möglichkeit geschaffen, unterschiedliche Stoffe mit hoher Kapazität in der erfindungsgemäßen Probenanreicherungskammer zwischenzuspeichern.

Dabei ist es besonders bevorzugt, wenn der erste und der/die weitere(n) Probenanreicherungsabschnitt(e) strömungstechnisch seriell zueinander angeordnet sind und durch eine Trennstruktur voneinander getrennt sind, welche für das Adsorbermaterial undurchlässig und für das Probenmaterial durchlässig ist. Die serielle Anordnung der mehreren Probenanreicherungsabschnitte ermöglicht eine Speicherung unterschiedlicher Stoffe auf kompakten Raum. Die Trennstruktur zwischen den Probenanreicherungsabschnitten kann dabei insbesondere parallel und konstruktiv gleichartig zu einer Trennstruktur zwischen den zuvor beschriebenen Probenanreicherungsabschnitten und dem Einlass- bzw. Auslassabschnitt sein.

Alternativ hierzu ist es in bestimmten Anwendungen bevorzugt, wenn der erste und der/die weitere(n) Probenanreicherungsabschnitt(e) strömungstechnisch parallel zueinander angeordnet sind und durch eine Trennstruktur voneinander getrennt sind, welche zumindest für das Adsorbermaterial, vorzugsweise auch für das Probenmaterial undurchlässig ist. Diese Fortbildung ermöglicht es, wie die zuvor beschriebene Fortbildung, unterschiedliche Stoffe mit hoher Kapazität in der erfindungsgemäßen Probenanreicherungskammer zwischenzuspeichern. Durch die parallele Anordnung können die zwischengespeicherten Stoffe bei Entladung der Probenanreicherungskammer als kompakter Block aus der Probenanreicherungskammer abgeleitet werden und hierdurch in einer beispielsweise für eine nachfolgende Analyse günstigen Form weiterverarbeitet werden.

Eine weitere bevorzugte Ausführungsform weist zumindest einen Fertigungshilfskanal auf zur Befüllung zumindest eines Teils der Probenanreicherungskammer mit Adsorbermaterial, der mittels eines Verschlussstopfens verschlossen ist, der aus einem Material besteht, welches einen etwa gleichen, vorzugsweise identischen Wärmeausdehnungskoeffizienten aufweist, wie das Substratmaterial, in dem der Fertigungshilfskanal ausgebildet ist. Im Falle der zuvor beschriebenen Fortbildungen der Probenanreicherungskammer mit mehreren, voneinander durch Trennstrukturen getrennten Probenanreicherungsabschnitten ist es bevorzugt, für jeden der Probenanreicherungsabschnitte jeweils einen separaten, verschließbaren Fertigungshilfskanal bereitzustellen.

Die mikrotechnologische Fertigung von Bauteilen mit Hohlräumen, in denen ein bestimmtes Material angeordnet ist, stellt eine fertigungstechnische Besonderheit dar, die in vielerlei Hinsicht problematisch ist. Es ist bekannt, zum Zwecke der Befüllung bereits bei der mikrotechnologischen Fertigung der Substrate einen Hilfskanal auszubilden, durch den nach Fertigstellung der grundsätzlichen Struktur des Bauteils und folglich der Ausbildung des Hohlraums die Befüllung erfolgen kann. Dieser Hilfskanal muss nach erfolgter Befüllung verschlossen werden, was durch einen Klebstoff möglich ist, der in flüssiger Form in den Fertigungshilfskanal eingebracht wird und nachfolgend aushärtet. Ein Nachteil dieser Gestaltung liegt jedoch darin, dass mikrotechnologische Bauteile häufig im späteren Betrieb erheblichen Temperaturänderungen unterworfensind und hierdurch thermische Spannungen im Bereich des Fertigungshilfskanals erzeugt werden. Dies kann mit der erfindungsgemäßen Fortbildung vermieden werden, indem ein Verschlussstopfen mit dem gleichen oder zumindest einem sehr ähnlichen thermischen Ausdehnungsverhalten wie das Substratmaterial selbst anstelle des Klebstoffs verwendet wird. In diesem Fall treten keine geometrisch unterschiedlichen Relativdehnungen auf und thermische Spannungen werden vermieden bzw. weitestgehend reduziert.

Dabei ist es insbesondere bevorzugt, wenn sich der Fertigungshilfskanal von außen nach innen konisch verjüngt und der Verschlussstopfen kongruent hierzu ausgeformt ist und klemmend, gegebenenfalls mittels eines Klebstoffes in dem Fertigungshilfskanal befestigt ist. Auf diese Weise wird einerseits eine besonders günstige Befüllbarkeit durch den Fertigungshilfskanal ermöglicht, indem dieser etwa trichterförmig gestaltet ist und zudem eine abdichtende Verklemmung des Verschlussstopfens in dem Fertigungshilfskanal erzielt. Eine zusätzliche Sicherung des Verschlussstopfens mittels Klebstoff verhindert ein Lösen desselben innerhalb des Fertigungshilfskanals. Die geringe Schichtdicke des Klebstoffs ist hinsichtlich thermischer Dehnungen bzw. Spannungen in der Regel unkritisch.

Alternativ zu den beiden vorstehend beschriebenen Ausführungsformen des Verschlussstopfens kann es in bestimmten Anwendungen bevorzugt sein, wenn sich der Fertigungshilfskanal von innen nach außen konisch verjüngt und mit einem Stopfen abgedichtet ist, der aus einem Material ausgebildet ist, das aus einem flüssigem Verarbeitungszustand in einen festen Zustand aushärtbar ist. Auf diese Weise wird der Verschlussstopfen durch den im Inneren der Probenanreicherungskammer herrschenden Überdruck in seinen Sitz gepresst und eine mit dem Innendruck ansteigende Dichtwirkung erzielt.

Insbesondere ist es bevorzugt, wenn sich der Fertigungshilfskanal senkrecht zur Durchströmungsrichtung der Probenanreicherungskammer erstreckt. Diese Ausgestaltung ist einerseits fertigungstechnisch für die Herstellung der Substrate vorteilhaft und ermöglicht andererseits eine leichte und zuverlässige Befüllung der Probenanreicherungskammer. Insbesondere kann mit dieser Anordnung die Ausführungsform mit Probenanreicherungsabschnitt, Einlassabschnitt und Auslassabschnitt besonders vorteilhaft ausgeführt werden, da der Probenanreicherungsabschnitt durch den günstig angeordneten Fertigungshilfskanal gut befüllt werden kann.

Es ist besonders bevorzugt, wenn die Analyseeinheit eine gaschromatographische Trennsäule umfasst, um ein Probengas zu analysieren. Diese Ausgestaltung der Analyseeinheit wirkt besonders vorteilhaft mit der erfindungsgemäßen Probenanreicherungskammer zusammen und erlaubt einen insgesamt besonders kompakten Aufbau der mikrotechnologischen Analysevorrichtung.

Die erfindungsgemäße Vorrichtung wird vorzugsweise mit einem Verfahren zur Herstellung einer mikrotechnologischen Probenanreicherungskammer hergestellt, mit den Schritten:
- Herstellen einer Probensammelkammer, eines mit dieser verbundenen Zufuhrkanals und eines mit dieser verbundenen Abfuhrkanals in zumindest einem von zwei Substraten mittels mikrotechnologischer Verfahren, insbesondere selektivem Ätzen,
- Herstellen zumindest eines mit der Probensammelkammer verbundenen Ferügungshilfskanals in einem oder beiden Substraten,
- Verbinden der beiden Substrate,
- Befüllen zumindest eines Teils der Probensammelkammer mit einem Adsorbermaterial durch den Fertigungshilfskanal, und
- Verschließen des Fertigungshilfskanals mit einem Verschlussstopfen aus einem Material mit etwa dem gleichen Wärmeausdehnungskoeffizienten wie das Substrat, in dem der Fertigungshilfskanal ausgebildet ist.

Die erfindungsgemäße Vorrichtung wird vorzugsweise mit einem Verfahren zum Analysieren eines Probenmaterials betrieben, mit den Schritten:
· Leiten des Probenmaterials durch ein Ventil in einer ersten Ventilstellung in eine miniaturisierte Probenanreicherungskammer,
Sammeln des Probenmaterials in der Probenanreicherungskammer,
- Leiten des Probenmaterials durch das Ventil in einer zweiten Ventilstellung in eine miniaturisierte Analyseeinheit, insbesondere eine gaschromatographische Trennsäule.

Eine bevorzugte Ausführungsform wird anhand der anhängenden Figuren beschrieben. Es zeigen:
- Fig. 1:: Eine erste Ausführungsform der erfindungsgemäßen miniaturisierten Probenanreicherungskammer,
- Fig. 2:: Eine zweite Ausführungsform der erfindungsgemäßen Probenanreicherungskammer,
- Fig. 3a:: Eine quergeschnittene Längsansicht einer ersten Variante des Mittelbereichs der Probenanreicherungskammer gem. Fig. 1 oder 2,
- Fig. 3b:: Eine quergeschnittene Längsansicht einer zweiten Variante des Mittelbereichs der Probenanreicherungskammer gem. Fig. 1 oder 2,
- Fig. 4:: Eine schematische Darstellung einer miniaturisierten Analyseeinheit nach der Erfindung in einer Schaltstellung zur Befüllung der Probenanreicherungskammer mit einem Probengas,
- Fig. 5:: Eine Darstellung gem. Fig. 4 in einer Schaltstellung zur Analyse eines Gases aus der gefüllten Probenanreicherungskammer,
- Fig. 6a:: Eine schematische, quergeschnittene Frontalansicht auf eine dritte Ausführungsform der erfindungsgemäßen Probenanreicherungskammer,
- Fig. 6b:: Eine schematische, entlang der Linie A-A in Fig. 6a längsgeschnittene Draufsicht auf die dritte Ausführungsform der erfindungsgemäßen Probenanreicherungskammer,
- Fig. 7a:: Eine schematische, quergeschnittene Frontalansicht auf eine vierte Ausführungsform der erfindungsgemäßen Probenanreicherungskammer,
- Fig. 7b:: Eine schematische, entlang der Linie A-A in Fig. 7a längsgeschnittene Draufsicht auf die vierte Ausführungsform der erfindungsgemäßen Probenanreicherungskammer,
- Fig. 8a:: Eine schematische, gemäß Fig. 7b längsgeschnittene Draufsicht auf eine fünfte Ausführungsform der erfindungsgemäßen Probenanreicherungskammer, und
- Fig. 8b:: Eine schematische Draufsicht auf die fünfte Ausführungsform der erfindungsgemäßen Probenanreicherungskammer.

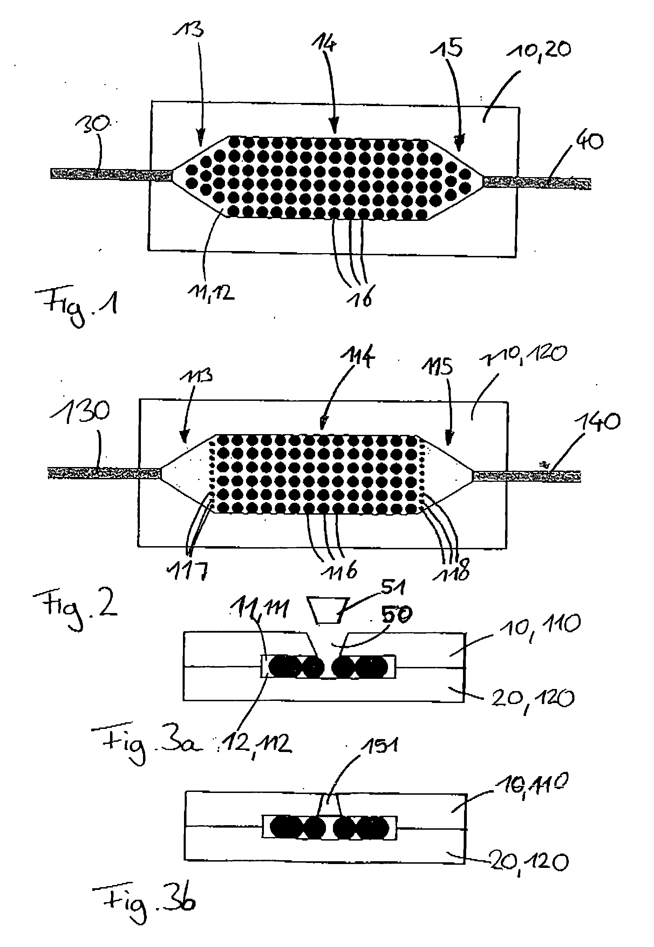

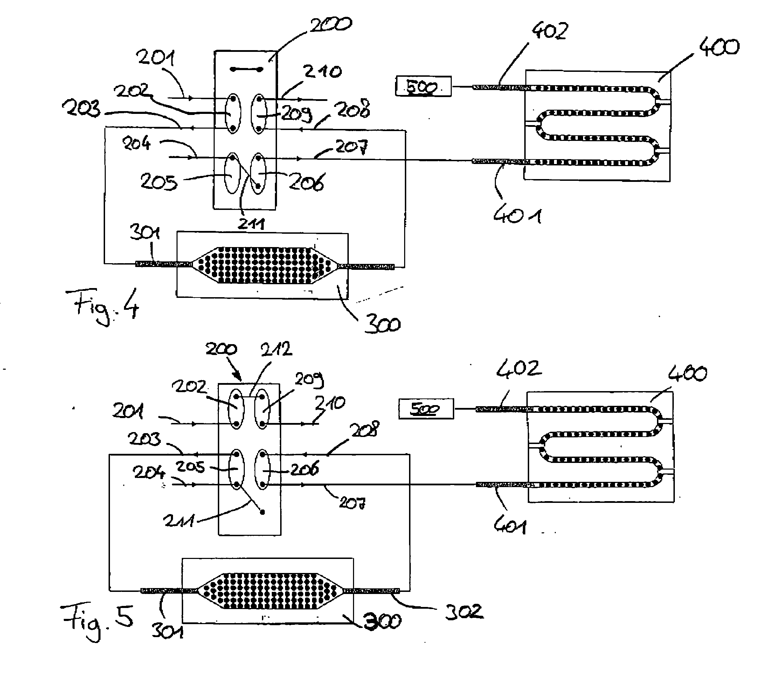

Die in Fig. 1 dargestellte Probenanreicherungskammer umfasst zwei übereinander angeordneten Siliziumsubstrate 10,20, in denen jeweils eine geometrisch übereinstimmende Ausnehmung 11,12 eingeätzt ist. Die Ausnehmungen 11 und 12 fügen sich zu einem zusammenhängenden Hohlraum, wenn die beiden Siliziumsubstrate aufeinander gebondet werden.

Der Hohlraum 11,12 ist mittels eines in eine oder beide Substrate 10,20 eingeätzten Eingangskanal 30 verbunden, durch den ein in der Probenanreicherungskammer zu speicherndes Gas in den Hohlraum einströmen kann. Weiterhin ist ein Hohlraum 11,12 mit einem in ein oder beide Substrate eingeätzte Auslasskanal 40 verbunden, durch den das in der Probenanreicherungskammer gesammelte Gas ausströmen kann.

Im Bereich der Einmündung des Einlasskanals 30 weist der Hohlraum 11,12 einen Einlassbereich 13 auf, dessen Querschnitt sich in Strömungsrichtung erweitert. An den Einlassabschnitt 13 schließt sich ein Hauptspeicherabschnitt 14 an, dessen Querschnitt in Strömungsrichtung konstant ist. Schließlich mündet der Hauptspeicherabschnitt 14 in einen Auslassabschnitt 15, dessen Querschnitt sich in Strömungsrichtung bis auf den Querschnitt des Auslasskanals 40 verringert.

Der Einlassabschnitt 13, der Hauptspeicherabschnitt 14 und der Auslassabschnitt 15 sind mit einem Absorbermaterial gefüllt, welches durch Absorberkugeln 16 in Fig. 1 dargestellt ist. Bei dem Absorbermaterial kann es sich um typische Absorbermaterialien aus der Chromatographie handeln, beispielsweise Zeolite (Al2O3), Graphit oder organische Materialien, die beispielsweise in Partikelform in dem Hohlraum 11,12 angeordnet sind.

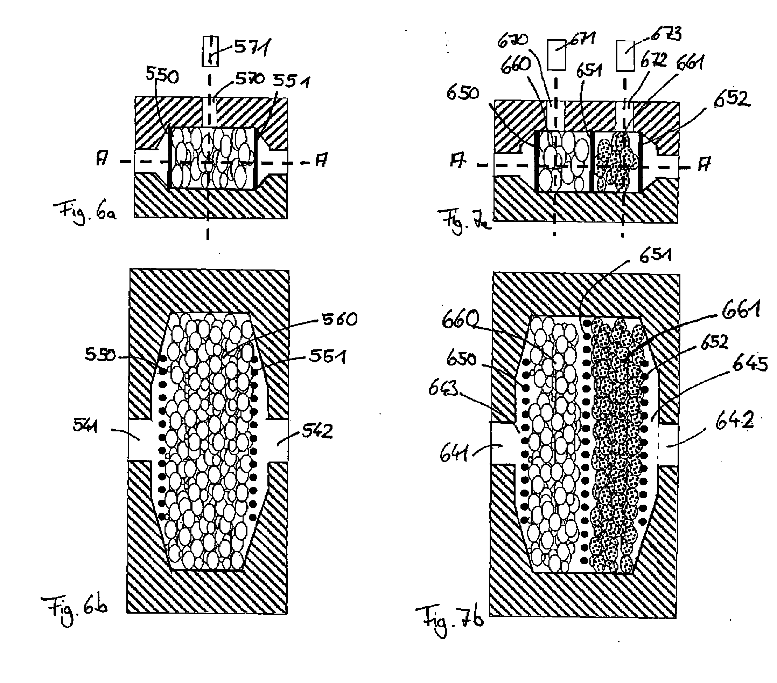

Fig. 2 zeigt eine zweite Ausführungsform der erfindungsgemäßen Probenanreicherungskammer. Wiederum ist ein Hohlraum111,112 in zwei aufeinander gebondeten Substraten 110,120 ausgebildet und mit einem Einlasskanal 130 und einem Auslasskanal 140 verbunden in analoger Weise wie zuvor zu Fig. 1 beschrieben.

Der Hohlraum 111,112 der Probenanreicherungskammer gem. Fig. 2 weist einen im Wesentlichen übereinstimmenden Verlauf des Querschnitts in Strömungsrichtung auf wie der Hohlraum 11,12 der Fig. 1. Jedoch ist bei der Probenanreicherungskammer gem. Fig. 2 der Einlassabschnitt 113 von dem Hauptspeicherabschnitt 114 durch eine Vielzahl von Stegen 117 abgetrennt. Die Stege 117 erstrecken sich senkrecht vom Boden des Hohlraums 111,112 zur Decke des Hohlraums und hindern das Absorbermaterial 116 daran, aus dem Hauptspeicherabschnitt 114 in den Einlassabschnitt 113 zu gelangen.

In identischer Weise ist der Hauptspeicherabschnitt 114 vom Auslassabschnitt 115 durch mehrere Stege 118 getrennt, wodurch wiederum verhindert wird, dass Absorbermaterial 116 in den Auslassabschnitt 115 gelangt.

Bei der Ausführungsform gem. Fig. 2 wird somit in miniaturisierter Technologie erreicht, dass das durch den Einlasskanal 130 einströmende Gas sich zunächst störungsfrei auf den Gesamtquerschnitt des Hohlraums 111.112 ausbreiten kann, hierauf folgend zwischen den Stegen 117 hindurch in den Hauptspeicherabschnitt 114 gelangt und dort adsorbiert werden kann und bei Entleerung der Probenanreicherungskammer zwischen den Stegen 118 hindurch wiederum störungsfrei im Auslassabschnitt 115 zum Auslasskanal 140 zu strömen. Auf diese Weise wird verhindert, dass in den kritischen Einlass- und Auslassabschnitten 113,115 Totvolumina auftreten, in denen sich Gasreste fangen könnten, die nachfolgende Messergebnisse verfälschen. Des weiteren wird so eine homogene Beströmung des Adsorbermaterials gewährleistet und auf diese Weise eine symmetrische Beladung und Entladung ohne Verschleppungen realisiert.

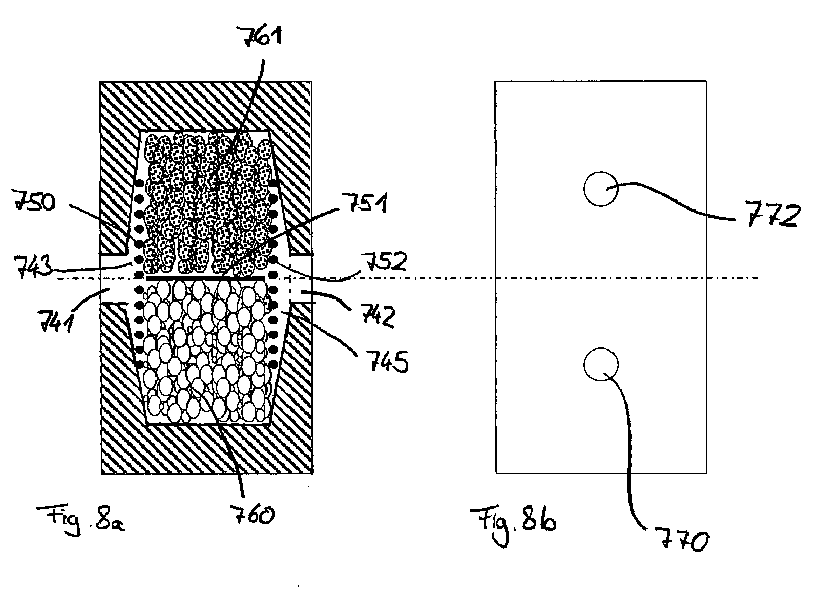

Fig. 3A zeigt eine Version der Probenanreicherungskammer gem. Fig. 1 oder gem. Fig. 2 und veranschaulicht die Fertigungshilfsöffnung, die erforderlich ist, um die Probenanreicherungskammer mit Adsorbermaterial zu füllen. Typischerweise werden die Substrate 10,20 bzw. 110,120 nach dem Ätzen der Kavität 11,12 bzw. 111,112 aufeinander gebondet und erst hierauf folgend mit Adsorbermaterial 16 bzw. 116 befüllt. Da dies durch die Einlass- bzw. Auslasskanäle aufgrund der geringen Querschnitts und im Falle der Ausführungsform gem. Fig. 2 zusätzlich aufgrund der Stege 117,118 nicht möglich ist, wird eine Fertigungshilfsöffnung 50 vorgesehen. Die Fertigungshilfsöffnung verengt ihren Querschnitt ausgehend von der äußeren Oberfläche des Substrats 10, 110 in Richtung der Kavität 11,12 bzw. 111,112.

Ein Verschlussstopfen 51, der ebenfalls aus Silizium hergestellt ist, wie die Substrate 10,20,110,120, fügt sich kongruent in die Öffnung 50 ein und verschließt diese. Der Verschluss kann durch ein adhäsiv wirkendes Material zusätzlich verstärkt werden, welches eine Verklebung des Stopfens 51 in der Öffnung 50 bewirkt. Mit Hilfe des Stopfens 51 kann somit der Hohlraum 11,12,111,112 nach Befüllung mit Adsorbermaterial gasdicht verschlossen werden und aufgrund der Materialidentität zwischen Stopfen 51 und Substrat kommt es auch bei den erheblichen Temperaturänderungen, denen die Probenanreicherungskammer ausgesetzt ist, zu keinen thermischen Spannungen im Bereich der Fertigungshilfsöffnung 50.

Fig. 3B zeigt eine andere Variante der Fertigungshilfsöffnung für die Probenanreicherungskammer gem. Fig. 1 oder gem. Fig. 2. Bei dieser Ausführungsform ist die Fertigungshilfsöffnung 150 ebenfalls konisch ausgebildet, jedoch erweitert sich ihr Querschnitt ausgehend von der äußeren Oberfläche des Substrats 10,110 in Richtung des Hohlraums 11,12,111,112. Die Einbringung eines vorgefertigten Verschlussstopfens von außen ist in diesem Fall nicht möglich. Stattdessen wird für die Variante gem. Fig. 3B ein flüssiges Verschlussmaterial verwendet, welches in die Fertigungshilfsöffnung 51 soweit eingefüllt wird, dass es einen bündigen Verschluss mit der inneren Wandfläche des Hohlraums 11,12,111,112 ausbildet. Das flüssige Verschlussmaterial härtet hierauf folgend aus, beispielsweise durch eine chemische Vernetzungsreaktion, und bildet somit einen Verschlussstopfen aus. Der Vorteil der Variante gem. Fig. 3B liegt darin, dass durch den in der Kavität 11,12,111,112 vorherrschenden Gasdruck der ausgehärtete Verschlussstopfen in seinen Dichtungssitz in den Fertigungshilfskanal 150 gepresst wird und hierdurch eine Selbstabdichtung erzielt wird.

Fig. 4 zeigt eine beispielhafte Schaltungsanordnung einer miniaturisierten Analysevorrichtung. Die Analysevorrichtung umfasst ein miniaturisiertes Mehrwegeventil 200, eine miniaturisierte Probenanreicherungskammer 300 und eine miniaturisierte Analyseeinheit 400.

Die Probenanreicherungskammer 300 kann beispielsweise ausgebildet sein wie in Bezug zu den Fig. 1 bis 3b beschrieben.

Die Analyseeinheit 400 kann beispielsweise eine Dünnschichttrennsäule oder eine gepackte Trennsäule sein, die durch einen in jeweils zwei Substrate geätzten Graben gebildet wird. Zur Technologie solcher Trennsäulen wird auf die eingangs genannten DE 20 2005 011 825 und DE 10 2004 050 569 verwiesen, deren Offenbarung zur Ausgestaltung solcher miniaturisierter Trennsäulen durch Verweis hiermit einbezogen wird.

Das miniaturisierte Mehrwegeventil 200 weist zwei Schaltstellungen auf. In der ersten Schaltstellung wird ein aus einem Probeneinlasskanal 201 einströmendes Probengas über einen schaltbaren Ventilweg 202 in einen Ventilauslass 203 geleitet, der mit dem Einlasskanal 301 der Probenanreicherungskammer verbunden ist. Das Gas strömt in die Probenanreicherungskammer 300 und wird an dem Adsorbermaterial gespeichert. Ausströmendes Gas aus dem Auslasskanal 202 der Probenanreicherungskammer 300 wird wiederum über einen Einlasskanal 208 in das Ventil 200 eingeleitet und über einen schaltbaren Ventilweg 209 zu einem Ventilauslass 210 geführt, der in die Umgebung mündet.

In der ersten Schaltstellung wird weiterhin ein über einen Ventileinlasskanal 204 einströmendes Trägergas, beispielsweise ein inertes Gas, über einen inneren Ventilkanal 211 und einen schaltbaren Ventilweg 206 auf einen Ventilauslass 207 geleitet, der mit dem Einlasskanal 401 der Trennsäule 400 verbunden ist. Das Trägergas durchströmt und spült hierdurch die Trennsäule 400 und tritt durch einen Auslasskanal 402 aus der Trennsäule aus und in einen Detektor 500 ein.

Fig. 5 zeigt die Analysevorrichtung gem. Fig. 4 in der zweiten Schaltstellung. In dieser Schaltstellung sind die schaltbaren Ventilwege 202,205,206,209 verschoben, so dass sich andere Gasverläufe ergeben.

Das durch den Ventileinlass 204 einströmende Trägergas wird durch den schaltbaren Ventilweg 205 auf den Ventilauslass 203 geschaltet und strömt hierdurch in den Einlasskanal 301 und spült das in der vorigen Schaltstellung in der Probenanreicherungskammer 300 gesammelte Probengas aus dem Auslasskanal 302 der Probenanreicherungskammer 300. Von dort tritt das Probengas wiederum über den Ventileinlass 208 in das Ventil 200 ein und wird über den schaltbaren Ventilweg 206 auf den Ventilauslass 207 geleitet. Durch schnelles Aufheizen der Probenanreicherung desorbieren die gesammelten Moleküle und verlassen die Probenanreicherung als kompaktes Paket über den Auslasskanal 302. Das Gas wird somit zum Einlasskanal 401 der Trennsäule 400 geführt und durchläuft die Trennsäule 400 und tritt nach entsprechender Auftrennung in Abhängigkeit des Atom- bzw. Molekulargewichts in den Detektor 500 ein und kann laufzeitabhängig analysiert werden.

Im zweiten Schaltzustand wird das durch den Ventileinlass 201 eintretende Probengas über den schaltbaren Ventilweg 202 zu einem ventilinternen Verbindungskanal 212 geleitet und von dort über den schaltbaren Ventilweg 209 auf den Ventilauslass 210 geführt, von dem es wiederum, wie zuvor in die Umgebung abgegeben wird.

Die Fig. 6a,b zeigen eine dritte Ausführungsform der Probenanreicherungskammer. Die Probenanreicherungskammer gem. dieser sechsten Ausführungsform ist in Strömungsrichtung, d.h. in Verbindung einer Einlassöffnung 541 und einer Auslassöffnung 542 kürzer bemessen als quer dazu. Durch diese Geometrie wird für das die Probensammelkammer durchströmende Fluid ein großer Querschnitt bereitgestellt und hierdurch auch bei geringer Länge der Probensammelkammer aufgrund der großen Breite eine hohe Beladungskapazität für ein Adsorbens 560 erzielt. Wie zuvor beschrieben, wird ein das Adsorbens aufnehmender Probenanreicherungsabschnitt mittels Trennstrukturen 550,551 von einem Einfass- bzw. Auslassabschnitt getrennt. Besonders vorteilhaft an der in den Fig. 6a,b gezeigten Probensammelkammergeometrie ist, dass eine Komponententrennung aufgrund der Kürze der Strömungsdistanz innerhalb der Probensammelkammer vermieden wird und folglich die in der Probensammelkammer absorbierten Bestandteile des Fluids als kompakter Block aus der Probensammelkammer wieder abgeführt werden kann.

Die Fig. 7a,b zeigen eine Fortbildung der Ausführungsform gem. Fig. 6a,b. Die in den Fig. 7a,b gezeigte Probenanreicherungskammer weist eine Einlassöffnung 641 und eine Auslassöffnung 642 auf. Hinter der Einlassöffnung 641 ist ein Einlassabschnitt 643 angeordnet, der von einer ersten Packung eines Adsorbermaterials 660 durch eine Trennstruktur 650 getrennt ist. Die Trennstruktur 650 wird durch eine Vielzahl von Stegen gebildet, die so bemessen und voneinander beabstandet sind, dass das Adsorbermaterial 660 nicht in den Einlassabschnitt 643 gelangen kann, wohl aber das durch die Einlassöffnung 641 strömende Fluid zwischen den Stegen hindurch in die Packung des Adsorbermaterials 660 strömen kann.

Weiterhin ist in Strömungsrichtung hinter dem Adsorbermaterial 660 in der Probenanreicherungskammer ein zweites Adsorbermaterial 661 angeordnet. Das zweite Adsorbermaterial 661 ist von dem ersten Adsorbermaterial 660 durch eine Trennstruktur 651 getrennt, die wiederum aus einer Vielzahl von Stegen gebildet wird, die so bemessen und beabstandet sind, dass weder das Adsorbermaterial 660 noch das Adsorbermaterial 661 die Trennstruktur durchdringen kann, dass aber das die Probenanreicherungskammer durchströmende Fluid durch diese Trennstruktur hindurchströmen kann.

Die zweite Packung Adsorbermaterial 661 wird von der Auslassöffnung 642 wiederum durch eine weitere Trennstruktur 652 abgetrennt, wodurch zwischen der zweiten Packung Adsorbermaterial 661 und der Auslassöffnung 642 ein Auslassabschnitt 645 gebildet wird, in dem kein Adsorbermaterial angeordnet ist, wie im Einlassabschnitt 643.

Die Probenanreicherungskammer gemäß den Fig. 7a,b stellt daher eine strömungstechnisch serielle Anordnung zweier unterschiedlicher Adsorbermaterialien bereit und ermöglicht daher die temporäre Speicherung unterschiedlicher Bestandteile des Fluids in den unterschiedlichen Adsorbermaterialien. Durch die Geometrie und die serielle Anordnung wird eine kompakte Abgabe des Adsorbermaterials aus der Probenanreicherungskammer ermöglicht.

Wie in Fig. 7a zu erkennen, ist ein erster Fertigungshilfskanal 670 in das obenliegende Substrat eingearbeitet, der mit einem Verschlussstopfen 671 verschlossen werden kann, nachdem das Adsorbermaterial 660 in den Hohlraum zwischen den beiden Trennstrukturen 650,651 eingefüllt worden ist.

Ein zweiter Fertigungshilfskanal 672, der mit einem entsprechenden Verschlussstopfen 673 verschlossen werden kann, ist zusätzlich bereitgestellt, um das Adsorbermaterial 661 in den Hohlraum zwischen den Trennstrukturen 651,652 einfüllen zu können. Die Fertigungshilfskanäle 670,672 und die hierzu passenden Verschlussstopfen 671,673 können gemäß den vorherigen Ausführungen ausgestaltet werden.

Die Fig, 8a,b zeigen eine alternative Fortbildung der Ausführungsform gemäß Fig. 6a,b. Die in den Fig. 8a,b gezeigte Probenanreicherungskammer weist eine Einlassöffnung 741 und eine Auslassöffnung 742 auf. Hinter der Einlassöffnung 741 ist ein Einlassabschnitt 743 angeordnet. Der Einlassabschnitt mündet direkt in einen ersten, mit Adsorbermaterial gefüllten Probenanreicherungsabschnitt 760 und einen strömungstechnisch parallel hierzu angeordneten zweiten, mit einem unterschiedlichen Adsorbermaterial gefüllten Probenanreicherungsabschnitt 761.

Der erste und zweite Probenanreicherungsabschnitt 760, 761 sind vom Einlassabschnitt 743 durch eine Trennstruktur 750 getrennt ist. Die Trennstruktur 750 wird durch eine Vielzahl von Stegen gebildet, die so bemessen und voneinander beabstandet sind, dass weder das im Probenanreicherungsabschnitt 760 noch das im Probenanreicherungsabschnitt 761 angeordnete Adsorbermaterial in den Einlassabschnitt 643 gelangen kann, wohl aber das durch die Einlassöffnung 641 strömende Fluid zwischen den Stegen hindurch in die Probenanreicherungsabschnitte 760, 761 strömen kann.

Der erste Probenanreicherungsabschnitt 760 ist von dem zweiten Probenanreicherungsabschnitt 761 durch eine Trennstruktur 751 getrennt, die aus einer durchgehenden Wand gebildet wird, so dass weder das Adsorbermaterial 760 noch das Adsorbermaterial 761 noch das Probenmaterial die Trennstruktur 751 durchdringen kann.

Der erste Probenanreicherungsabschnitt 760 und der zweite Probenanreicherungsabschnitt 761 grenzen an dem der Trennstruktur 750 gegenüberliegenden Ende wiederum an eine Trennstruktur 752, welche die beiden Probenanreicherungsabschnitten 760, 761 von einem Auslassabschnitt 745 trennt. Im Auslassabschnitt 745 ist kein Adsorbermaterial angeordnet. Auf diese Weise kann das Probenmaterial aus der Einlassöffnung 741 durch die Trennstruktur 750 direkt in beide Probenanreicherungsabschnitte 760, 761 eintreten und aus den beiden Probenanreicherungsabschnitte 760, 761 durch die Trennstruktur 752 direkt in die Auslassöffnung 642 eintreten.

Die Probenanreicherungskammer gem. den Fig. 8a,b stellt daher strömungstechnisch eine Parallelanordnung zweier unterschiedlicher Adsorbermaterialien bereit und ermöglicht hierdurch die temporäre Speicherung unterschiedlicher Bestandteile des Probenmaterials in den unterschiedlichen Adsorbermaterialien. Durch die Geometrie und die parallele Anordnung wird eine Abgabe der adsorbierenden Bestandteile des Probenmaterials aus der Probenanreicherungskammer ermöglicht ohne dass hierbei ein Zeitversatz beziehungsweise Abstand zwischen den in den beiden Probenanreicherungsabschnitten gespeicherten Bestandteile des Probenmaterials auftritt.

Wie in Fig. 8b zu erkennen, ist ein erster Fertigungshilfskanal 770 in das obenliegende Substrat eingearbeitet, der mit einem Verschlussstopfen verschlossen werden kann, nachdem das Adsorbermaterial in den Probenanreicherungsabschnitt 760 eingefüllt worden ist.

Ein zweiter Fertigungshilfskanal 772, der mit einem entsprechenden Verschlussstopfen verschlossen werden kann, ist zusätzlich bereitgestellt, um das Adsorbermaterial in den Probenanreicherungsabschnitt 761 einfüllen zu können. Die Fertigungshilfskanäle 770,772 und die hierzu passenden Verschlussstopfen können gemäß den vorherigen Ausführungen ausgestaltet werden.

## Patentansprüche

1. Mikrotechnologische Analysevorrichtung, umfassend
- eine Probeneinlassöffnung (201) für zu analysierendes Probenmaterial, und
- eine mikrotechnologische Analyseeinheit (400), die mit der Probeneinlassöffnung verbunden ist, um zumindest eine Eigenschaft des Probenmaterials zu bestimmen,
**gekennzeichnet durch** eine mikrotechnologische Probenanreicherungskammer (300), die in Strömungsrichtung des Probenmaterials zwischen Probereinlassöffnung und Analyseeinheit angeordnet ist.

2. Analysevorrichtung nach Anspruch 1,
- **dadurch gekennzeichnet, dass** die Probenanreicherungskammer eine Probeneinlassöffnung (301), eine Probenauslassöffnung (302) und eine in Durchströmungsrichtung der Probenanreicherungskammer zwischen Probeneinlassöffnung und Probenauslassöffnung angeordnete Probenanreicherungskammer (13,14,15) aufweist.

3. Analysevorrichtung nach Anspruch 2,
**dadurch gekennzeichnet, dass** die Probeneinlassöffnung und die Probenauslassöffnung parallel, vorzugsweise fluchtend zueinander ausgerichtet sind.

4. Analysevorrichtung nach einem der vorhergehenden Ansprüche,
**dadurch gekennzeichnet, dass** sich die Probenanreicherungskammer in Durchströmungsrichtung weniger weit erstreckt als quer dazu.

5. Analysevorrichtung nach einem der vorhergehenden Ansprüche,
**dadurch gekennzeichnet, dass** zwischen Probenanreicherungskammer und Probeneinlassöffnung ein mikrotechnologisches Ventil (200) angeordnet ist, welches
- in einer ersten Ventilstellung die Probeneinlassöffnung (201) mit einer Einlassöffnung (301) der Probenanreicherungskammer und eine Auslassöffnung (302) der Probenanreicherungskammer mit einer Probenauslassöffnung (210) verbindet,
- in einer zweiten Ventilstellung eine Trägergaseinlassöffnung (204) mit der Einlassöffnung (301) der Probenanreicherungskammer und eine Auslassöffnung (302) der Probenanreicherungskammer mit einer Einlassöffnung (401) der Analyseeinheit (400) verbindet.

6. Analysevorrichtung nach einem der vorhergehenden Ansprüche,
**dadurch gekennzeichnet, dass** die Probenanreicherungskammer zumindest teilweise mit einem Adsorbermaterial (16;116) gefüllt ist.

7. Analysevorrichtung nach einem der vorhergehenden Ansprüche,
**dadurch gekennzeichnet, dass** die Probenanreicherungskammer
- einen Einlassabschnitt (13;113), der sich im Strömungsquerschnitt erweitert,
- einen Auslassabschnitt (15;115), der sich im Strömungsquerschnitt verringert, und
- einen Probenanreicherungsabschnitt (14;114) in Strömungsrichtung zwischen Einlass- und Auslassabschnitt
umfasst.

8. Analysevorrichtung nach dem vorhergehenden Anspruch,
**dadurch gekennzeichnet, dass** der Einlassabschnitt (113) und/oder Auslassabschnitt (115) von dem Probenanreicherungsabschnitt (114) mittels einer Trennstruktur (117;118) abgetrennt ist, welche für das Probenmaterial durchlässig und für das Adsorbermaterial (116) undurchlässig ist.

9. Analysevorrichtung nach einem der beiden vorhergehenden Ansprüche,
**dadurch gekennzeichnet, dass** nur im Probenanreicherungsabschnitt (114) Adsorbermaterial (116) angeordnet ist.

10. Analysevorrichtung nach einem der vorhergehenden Ansprüche,
**dadurch gekennzeichnet, dass** die Probenanreicherungskammer
- einen Einlassabschnitt (643), der sich im Strömungsquerschnitt erweitert,
- einen Auslassabschnitt (645), der sich im Strömungsquerschnitt verringert,
- einen ersten Probenanreicherungsabschnitt (660) in Strömungsrichtung zwischen Einlass- und Auslassabschnitt, und
- zumindest einen weiteren Probenanreicherungsabschnitt (661) in Strömungsrichtung zwischen Einlass- und Auslassabschnitt, umfasst.

11. Analysevorrichtung nach dem vorhergehenden Anspruch 10,
**dadurch gekennzeichnet, dass** der erste (660) und der/die weitere(n) Probenanreicherungsabschnitt(e) (661) strömungstechnisch seriell zueinander angeordnet sind und durch eine Trennstruktur (651) voneinander getrennt sind, welche für das Adsorbermaterial (660, 661) undurchlässig und für das Probenmaterial durchlässig ist.

12. Analysevorrichtung nach dem vorhergehenden Anspruch 10,
**dadurch gekennzeichnet, dass** der erste (760) und der/die weitere(n) Probenanreicherungsabschnitt(e) (761) strömungstechnisch parallel zueinander angeordnet sind und durch eine Trennstruktur (751) voneinander getrennt sind, welche zumindest für das Adsorbermaterial (760, 761), vorzugsweise auch für das Probenmaterial undurchlässig ist.

13. Analysevorrichtung nach einem der vorhergehenden Ansprüche,
**gekennzeichnet durch** zumindest einen Fertigungshilfskanals (50) zur Befüllung zumindest eines Teils der Probenanreicherungskammer, insbesondere eines Probenanreicherungsabschnitts, mit Adsorbermaterial, der mittels eines Verschlussstopfens (51) verschlossen ist, der aus einem Material besteht, welches einen etwa gleichen Wärmeausdehnungskoeffizienten aufweist, wie das Substratmaterial, in dem der Fertigungshilfskanal ausgebildet ist.

14. Analysevorrichtung nach dem vorhergehenden Anspruch,
**dadurch gekennzeichnet, dass** sich der Fertigungshilfskanal (50) von außen nach innen konisch verjüngt und der Verschlussstopfen (51) kongruent hierzu ausgeformt ist und klemmend und mittels eines Klebstoffes in dem Fertigungshilfskanal befestigt ist.

15. Analysevorrichtung nach einem der vorhergehenden Ansprüche 1-9,
**dadurch gekennzeichnet, dass** sich der Fertigungshilfskanal von innen nach außen konisch verjüngt und mit einem Stopfen abgedichtet ist, der aus einem Material ausgebildet ist, das aus einem flüssigem Verarbeitungszustand in einen festen Zustand aushärtbar ist.

16. Analysevorrichtung nach einem der drei vorhergehenden Ansprüche,
**dadurch gekennzeichnet, dass** sich der Fertigungshilfskanal senkrecht zur Durchströmungsrichtung der Probenanreicherungskammer erstreckt.

17. Analysevorrichtung nach einem der vorhergehenden Ansprüche,
**dadurch gekennzeichnet, dass** die Analyseeinheit eine gaschromatographische Trennsäule (400) umfasst, um ein Probengas zu analysieren.

18. Verfahren zur Herstellung einer mikrotechnologischen Probenanreicherungskammer, mit den Schritten:
- Herstellen einer Probensammelkammer (13,14,15), eines mit dieser verbundenen Zufuhrkanals (30) und eines mit dieser verbundenen Abfuhrkanals (40) in zumindest einem von zwei Substraten (10,20) mittels mikrotechnologischer Verfahren, insbesondere selektivem Ätzen,
- Herstellen zumindest eines mit der Probensammelkammer verbundenen Fertigungshilfskanals (50) in einem oder beiden Substraten,
- Verbinden der beiden Substrate,
- Befüllen zumindest eines Teils (114) der Probensammelkammer mit einem Adsorbermaterial (116) durch den Fertigungshilfskanal, und
- Verschließen des Fertigungshilfskanals mit einem Verschlussstopfen (51) aus einem Material mit etwa dem gleichen Wärmeausdehnungskoeffizienten wie das Substrat, in dem der Fertigungshilfskanal ausgebildet ist.

19. Verfahren zum Analysieren eines Probenmaterials, mit den Schritten:
- Leiten des Probenmaterials durch ein Ventil (200) in einer ersten Ventilstellung in eine miniaturisierte Probenanreicherungskammer (300),
- Sammeln des Probenmaterials in der Probenanreicherungskammer,
- Leiten des Probenmaterials durch das Ventil (200) in einer zweiten Ventilstellung in eine miniaturisierte Analyseeinheit (400), insbesondere eine gaschromatographische Trennsäule.
